# EUROPEAN PATENT APPLICATION

(11) **EP 4 793 864 A1**
(43) Date of publication of application: **19.08.2026**
(21) Application number: 26157131.9
(22) Date of filing: 09.02.2026
(51) Int. Cl.: G06Q 30/0251

(54) **PERSONALIZED NOTIFICATION OF ATTRACTIONS INCLUDING USER PREFERENCES OR AVERSIONS**

(30) Priority: 14.02.2025 US 202519054432
(71) Applicant: Disney Enterprises, Inc., Burbank, CA 91521 (US)
(72) Inventor: HALE, Gregory Brooks, Burbank, 9152 (US); GOMEZ, Celia, Burbank, CA 91521 (US); KANTHARAJU, Reshmashree Bangalore, Burbank, California 91521 (US)
(74) Representative: Dr. Weitzel & Partner

(57) **Abstract**

A system includes a hardware processor and a memory storing software code and a user preferences database including at least one of an aversion of a first user or a preference of the first user. The hardware processor is configured to execute the software code to receive, from an attraction providing a user experience, data describing a characteristic of the user experience, compare, using the data and the user preferences database, the characteristic of the user experience with the aversion and/or the preference of the first user, and determine, based on comparing, that the characteristic of the user experience corresponds to the aversion and/or the preference of the first user. The hardware processor is further configured to execute the software code to alert the first user in response to determining that the characteristic corresponds to the aversion and/or the preference of the first user.

## Description

The present invention refers to a method and a system for providing personalized notification of attractions including user preferences and/or aversions according to the independent claims.

Different people often have different preferences and aversions, as well as individual physical or medical conditions that make certain experiences more or less enjoyable. For example, a person with an aversion to the sight of blood and gore may not wish to be exposed to images of those features in a movie, theme park ride, or other user experience. However, that same person may enjoy the physical thrill of a rollercoaster. As another example, a parent of a child susceptible to photosensitive epilepsy may seek to avoid exposing their child to experiences that include flashing lights.

Conventional approaches to alerting potential users of an attraction to the presence of possibly undesirable or triggering stimuli include the use of signage and audible warnings. Unfortunately, identifying all types of concerning stimuli on a sign or in an audio track is not feasible. For example, if every potential warning were to be listed or announced it might be impractical for the potential users to read through every effect or listen to a long audio broadcast to know whether their specific concern is present. Such an approach may also undesirably deter potential users from an attraction if they see a long list of possible concerns. In addition, as additional possible concerning or aversive stimuli are identified, existing signage and audio announcements must be updated, which can be undesirably costly and time consuming. Moreover, these conventional approaches are not dynamic to the individual and their surrounding environment. For example, these solutions do not account for the location of a user during an experience, fail to alert the user (in real-time during a user experience) of what concerning stimuli is present or how long it will last, and fail to provide an alternative experience in place of aversive stimuli.

It is an object of the present invention to provide an improved method and system for providing personalized notification of attractions including user preferences and/or aversions.

The invention is defined by the features of the independent claims. The dependent claims and the description provide preferred embodiments.

An embodiment of the invention is as follows:
A method comprising:
receiving, from an attraction providing a user experience, data describing a characteristic of the user experience;
comparing, using the data and a user preferences database including at least one of an aversion of a first user or a preference of the first user, the characteristic of the user experience with the at least one of the aversion of the first user or the preference of the first user;
determining, based on comparing, that the characteristic of the user experience corresponds to the at least one of the aversion of the first user or the preference of the first user; and
alerting the user, in response to determining that the characteristic corresponds to the at least one of the aversion of the first user or the preference of the first user.

Preferably the method further comprising:
detecting that the first user is having the user experience in the attraction;
anticipating, while the first user is having the user experience in the attraction and when the characteristic corresponds to the aversion, an occurrence of an event including the characteristic; and
warning the first user of the anticipated occurrence of the event.

Preferably the method further comprising:
detecting that the first user is having the user experience in the attraction;
anticipating, while the first user is having the user experience in the attraction and when the characteristic corresponds to the aversion, an occurrence of an event including the characteristic;
obtaining substitute content for the event the substitute content omitting or decreasing the characteristic corresponding to the aversion; and
providing to the first user the substitute content.

Preferably the method further comprising:
detecting that the first user is having the user experience in the attraction; and
transmitting to the attraction providing the user experience modification data requesting one of an increase, a decrease, or an omission of the characteristic while the first user is having the user experience in the attraction.

Preferably the method, wherein the characteristic comprises at least one of a visual effect, a sound, an odor, a flavor, a motion, or a tactile effect.

Preferably the method, wherein the characteristic comprises at least one of a velocity, an acceleration, a change in altitude, a roll, a pitch, or a yaw of a vehicle used by the attraction while providing the user experience.

Preferably the method further comprising:
receiving location data of the first user;
determining, based on the location data, whether the first user is within a predetermined distance of the attraction providing the user experience; and
notifying the first user when the first user is determined to be within the predetermined distance of the attraction providing the user experience.

An embodiment of the invention is as follows:
A system comprising:
a computing platform including a hardware processor, a transceiver and a memory storing a software code and a user preferences database including at least one of an aversion of a first user or a preference of the first user;
the hardware processor configured to execute the software code to:
   receive, from an attraction providing a user experience, data describing a characteristic of the user experience;
   compare, using the data and the user preferences database, the characteristic of the user experience with the at least one of the aversion of the first user or the preference of the first user;
   determine, based on comparing, that the characteristic of the user experience corresponds to the at least one of the aversion of the first user or the preference of the first user; and
   alert the first user in response to determining that the characteristic corresponds to the at least one of the aversion of the first user or the preference of the first user.

Preferably the system, wherein the hardware processor is further configured to execute the software code to:
detect that the first user is having the user experience in the attraction;
anticipate, while the first user is having the user experience in the attraction and when the characteristic corresponds to the aversion, an occurrence of an event including the characteristic; and
warn the first user of the anticipated occurrence of the event.

Preferably the system, wherein the hardware processor is further configured to execute the software code to:
detect that the first user is having the user experience in the attraction;
anticipate, while the first user is having the user experience in the attraction and when the characteristic corresponds to the aversion, an occurrence of an event including the characteristic;
obtain substitute content for the event, the substitute content omitting or decreasing the characteristic corresponding to the aversion; and
provide the substitute content to the first user.

Preferably the system, wherein the hardware processor is further configured to execute the software code to:
detect that the first user is having the user experience in the attraction; and
transmit, to the attraction providing the user experience, modification data requesting one of an increase, a decrease, or an omission of the characteristic while the first user is having the user experience in the attraction.

Preferably the system, wherein the characteristic comprises at least one of a visual effect, a sound, an odor, a flavor, a motion, or a tactile effect.

Preferably the system, wherein the characteristic comprises at least one of a velocity, an acceleration, a change in altitude, a roll, a pitch, or a yaw of a vehicle used by the attraction while providing the user experience.

Preferably the system, wherein the hardware processor is further configured to execute the software code to:
receive location data of the first user;
determine, based on the location data, whether the first user is within a predetermined distance of the attraction providing the user experience; and
notify the first user when the first user is determined to be within the predetermined distance of the attraction providing the user experience.

An embodiment of the invention is as follows:
A system comprising:
a computing platform including a hardware processor, a transceiver and a memory storing a software code and a user preferences database including at least one of an aversion of a first user or a preference of the first user;
the hardware processor configured to execute the software code to:
   receive, from an attraction providing a user experience, data describing a characteristic of the user experience;
   compare, using the data and the user preferences database, the characteristic of the user experience with the at least one of the aversion of the first user or the preference of the first user;
   determine, based on comparing, that the characteristic of the user experience corresponds to the at least one of the aversion of the first user or the preference of the first user; and
   alert the first user in response to determining that the characteristic corresponds to the at least one of the aversion of the first user or the preference of the first user.

Preferably the system, wherein the hardware processor is further configured to execute the software code to:
detect that the first user is having the user experience in the attraction;
anticipate, while the first user is having the user experience in the attraction and when the characteristic corresponds to the aversion, an occurrence of an event including the characteristic; and
warn the first user of the anticipated occurrence of the event.

Preferably the system, wherein the hardware processor is further configured to execute the software code to:
detect that the first user is having the user experience in the attraction;
anticipate, while the first user is having the user experience in the attraction and when the characteristic corresponds to the aversion, an occurrence of an event including the characteristic;
obtain substitute content for the event, the substitute content omitting or decreasing the characteristic corresponding to the aversion; and
provide the substitute content to the first user.

Preferably the system, wherein the hardware processor is further configured to execute the software code to:
detect that the first user is having the user experience in the attraction; and
transmit, to the attraction providing the user experience, modification data requesting one of an increase, a decrease, or an omission of the characteristic while the first user is having the user experience in the attraction.

Preferably the system, wherein the characteristic comprises at least one of a visual effect, a sound, an odor, a flavor, a motion, or a tactile effect.

Preferably the system, wherein the characteristic comprises at least one of a velocity, an acceleration, a change in altitude, a roll, a pitch, or a yaw of a vehicle used by the attraction while providing the user experience.

Preferably the system, wherein the hardware processor is further configured to execute the software code to:
receive location data of the first user;
determine, based on the location data, whether the first user is within a predetermined distance of the attraction providing the user experience; and
notify the first user when the first user is determined to be within the predetermined distance of the attraction providing the user experience.

An embodiment of the invention is as follows:
A method for use by a system including a computing platform having a hardware processor, a transceiver and a memory storing a software code and a user preferences database including at least one of an aversion of a first user or a preference of the first user, the method comprising:
receiving, from an attraction providing a user experience, by the software code executed by the hardware processor, data describing a characteristic of the user experience;
comparing, by the software code executed by the hardware processor and using the data and the user preferences database, the characteristic of the user experience with the at least one of the aversion of the first user or the preference of the first user;
determining, by the software code executed by the hardware processor based on comparing, that the characteristic of the user experience corresponds to the at least one of the aversion of the first user or the preference of the first user; and
alerting the user, by the software code executed by the hardware processor in response to determining that the characteristic corresponds to the at least one of the aversion of the first user or the preference of the first user.

Preferably the method further comprising:
detecting, by the software code executed by the hardware processor, that the first user is having the user experience in the attraction;
anticipating, by the software code executed by the hardware processor while the first user is having the user experience in the attraction and when the characteristic corresponds to the aversion, an occurrence of an event including the characteristic; and
warning the first user, by the software code executed by the hardware processor, of the anticipated occurrence of the event.

Preferably the method further comprising:
detecting, by the software code executed by the hardware processor, that the first user is having the user experience in the attraction;
anticipating, by the software code executed by the hardware processor while the first user is having the user experience in the attraction and when the characteristic corresponds to the aversion, an occurrence of an event including the characteristic;
obtaining substitute content for the event, by the software code executed by the hardware processor, the substitute content omitting or decreasing the characteristic corresponding to the aversion; and
providing to the first user, by the software code executed by the hardware processor, the substitute content.

Preferably the method further comprising:
detecting, by the software code executed by the hardware processor, that the first user is having the user experience in the attraction; and
transmitting to the attraction providing the user experience, by the software code executed by the hardware processor, modification data requesting one of an increase, a decrease, or an omission of the characteristic while the first user is having the user experience in the attraction.

Preferably the method, wherein the characteristic comprises at least one of a visual effect, a sound, an odor, a flavor, a motion, or a tactile effect.

Preferably the method, wherein the characteristic comprises at least one of a velocity, an acceleration, a change in altitude, a roll, a pitch, or a yaw of a vehicle used by the attraction while providing the user experience.

Preferably the method further comprising:
receiving, by the software code executed by the hardware processor, location data of the first user;
determining, by the software code executed by the hardware processor based on the location data, whether the first user is within a predetermined distance of the attraction providing the user experience; and
notifying the first user, by the software code executed by the hardware processor, when the first user is determined to be within the predetermined distance of the attraction providing the user experience.

An embodiment of the invention is as follows:
A computer-readable non-transitory storage medium having stored thereon a software code and a user preferences database including at least one of an aversion of a first user or a preference of the first user, wherein when executed by a hardware processor the software code instantiates a method comprising:
receiving, from an attraction providing a user experience, data describing a characteristic of the user experience;
comparing, using the data and the user preferences database, the characteristic of the user experience with the at least one of an aversion of the first user or the preference of the first user;
determining, based on comparing, that the characteristic of the user experience corresponds to the at least one of the aversion of the first user or the preference of the first user; and
alerting the first user in response to determining that the characteristic corresponds to the at least one of the aversion of the first user or the preference of the first user.

Preferably the computer-readable non-transitory storage medium, the method further comprising:
detecting that the first user is having the user experience in the attraction;
anticipating, while the first user is having the user experience in the attraction and when the characteristic corresponds to the aversion, an occurrence of an event including the characteristic; and
warning the first user of the anticipated occurrence of the event.

Preferably the computer-readable non-transitory storage medium, the method further comprising:
detecting that the first user is having the user experience in the attraction;
anticipating, while the first user is having the user experience in the attraction and when the characteristic corresponds to the aversion, an occurrence of an event including the characteristic;
obtaining substitute content for the event, the substitute content omitting or decreasing the characteristic corresponding to the aversion; and
providing the substitute content to the first user.

Preferably the computer-readable non-transitory storage medium, the method further comprising:
detecting that the first user is having the user experience in the attraction; and
transmitting, to the attraction providing the user experience, modification data requesting one of an increase, a decrease, or an omission of the characteristic while the user is having the user experience in the attraction.

Preferably the computer-readable non-transitory storage medium, wherein the characteristic comprises at least one of a visual effect, a sound, an odor, a flavor, a motion, or a tactile effect.

Preferably the computer-readable non-transitory storage medium, wherein the characteristic comprises at least one of a velocity, an acceleration, a change in altitude, a roll, a pitch, or a yaw of a vehicle used by the attraction while providing the user experience.

Example of the invention will be described in connection with the figures, in which:
Figure 1 shows an exemplary use environment including a system for providing personalized notification of attractions including user preferences or aversions, according to one implementation;
Figure 2 shows a more detailed representation of an exemplary system for providing personalized notification of attractions including user preferences or aversions, according to one implementation;
Figure 3A depicts an exemplary use case for a system providing personalized notification of attractions including user preferences or aversions, according to one implementation;
Figure 3B depicts another exemplary use case for a system providing personalized notification of attractions including user preferences or aversions;
Figure 4A shows a flowchart presenting an exemplary method for providing personalized notification of attractions including user preferences or aversions, according to one implementation; and
Figure 4B shows a flowchart including various actions for extending the exemplary method outlined in Figure 4A, according to one implementation.

The following description contains specific information pertaining to implementations in the present invention. One skilled in the art will recognize that the present invention may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

As stated above, different people often have different preferences and aversions, as well as individual physical or medical conditions that make certain experiences more or less enjoyable. For example, a person with an aversion to the sight of blood and gore may not wish to be exposed to images of those features in a movie, theme park ride, or other user experience. However, that same person may enjoy the physical thrill of a rollercoaster. As another example, a parent of a child susceptible to photosensitive epilepsy may seek to avoid exposing their child to experiences that include flashing lights. Thus, characterizing a particular stimulus or stimuli as desirable, or conversely as undesirable, triggering, stressful or aversive is typically a subjective one that may vary among different individuals. It is noted that in the interests consistency and clarity, an undesirable, triggering, stressful or aversive stimulus, and undesirable, triggering, stressful or aversive stimuli will hereinafter be referred to as "concerning stimuli."

As further stated above, conventional approaches to alerting potential users of an attraction to the presence of possibly concerning stimuli include the use of signage and audible warnings. Unfortunately, identifying all types of concerning stimuli on a sign or in an audio track is not feasible. For example, if every potential warning were to be listed or announced it might be impractical for the potential users to read through every effect or listen to a long audio broadcast to know whether their specific concern is present. Such an approach may also undesirably deter potential users from an attraction if they see a long list of possible concerns. In addition, as additional possible concerning stimuli are identified, existing signage and audio announcements must be updated, which can be undesirably costly and time consuming. Moreover, these conventional approaches are not dynamic to the individual and their surrounding environment. For example, these solutions do not account for the location of a user during an experience, fail to alert the user (in real-time during a user experience) of what concerning stimuli is present or how long it will last, and fail to provide an alternate experience in place of concerning stimuli.

Thus, with conventional warning processes, the only option for a user wishing to avoid the concerning stimuli is to entirely avoid the experience that includes the concerning stimuli. By contrast, and as described below, a substantial advantage conferred by the present personalized notification solution is to enable a user to participate in an experience including concerning stimuli, be forewarned prior to being exposed to the concerning stimuli, and/or be provided substitute content during only that portion of the experience.

The present application discloses a personalized notification solution that addresses and overcomes the drawbacks and deficiencies in the conventional art. The novel and inventive systems and methods disclosed in the present application advance the state-of-the-art by introducing a solution that enables a user to proactively identify one or more stimuli or other characteristics (hereinafter "characteristic(s)") that the user considers to be concerning stimuli, as well as characteristic(s) that the user enjoys. Based on that user identification of characteristic(s) as concerning or enjoyable, the present personalized notification solution can advantageously inform a user of attractions to that the user may enjoy, or be averse to due to their inclusion of concerning stimuli. In some implementations, the present personalized notification solution can advantageously provide a user a rating, on a scale or one to five or one to ten for example, of how intensely characteristic(s) that are enjoyable or concerning to the user are emphasized in the attraction. The present personalized notification solution can also advantageously alert the user when the user is within a predetermined distance of such an attraction.

In addition, in instances in which a user opts to engage with an attraction that includes enjoyable or concerning characteristic(s), the present personalized notification solution can anticipate when during the user experience provided by the attraction, an event including the enjoyable or concerning characteristic(s) will occur. In some use cases, the present personalized notification solution may also provide substitute content for consumption by the user during that event. For example, on a moving ride or attraction, the present personalized notification solution may synchronize the changing location of the user as the user moves through the attraction with the timing of content being presented visually, audibly, with motion, or using other stimuli. In addition, in some implementations, the present personalized notification solution may use one or more machine learning (ML) models to process feedback data from a user subsequent to engagement of that user with a user experience provided by an attraction about which the user has been informed and/or for which substitute content has been provided, in order to improve the performance of the disclosed systems and methods on an ongoing basis.

It is noted that the present personalized notification solution can advantageously be implemented as automated systems and methods. As used in the present application, the terms "automation," "automated" and "automating" refer to systems and processes that do not require the participation of a human system operator. Thus, the methods described in the present application may be performed under the control of hardware processing components of the disclosed automated systems.

It is also noted that, as defined in the present application, the expression "ML model" refers to a computational model for making predictions based on patterns learned from samples of data or training data. Various learning algorithms can be used to map correlations between input data and output data. These correlations form the computational model and can be used to make future predictions on new input data. Such a predictive model may include one or more logistic regression models, Bayesian models, artificial neural networks (NNs) such as Transformers, large language models (LLMs), or multimodal foundation models, to name a few examples. In various implementations, ML models may be trained as classifiers and may be utilized to perform image processing, audio processing, natural-language processing, and other inferential analyses. A "deep neural network," in the context of deep learning, may refer to a NN that utilizes multiple hidden layers between input and output layers, which may allow for learning based on features not explicitly defined in raw data. As used in the present application, a feature identified as a NN refers to a deep neural network.

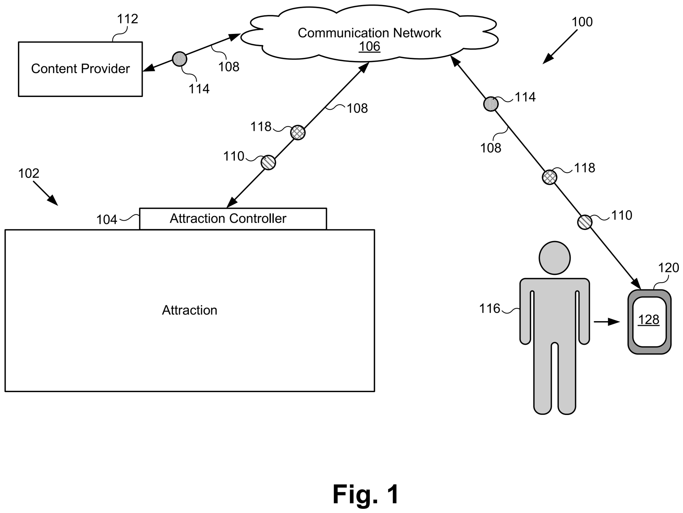

Figure 1 shows exemplary use environment 100 including system 120 for providing personalized notification of attractions including user preferences or aversions, according to one implementation. As shown in Figure 1, use environment 100 includes attraction 102 having attraction controller 104, content provider 112, and user 116 of system 120. In addition, Figure 1 shows communication network 106 and network links 108 communicatively coupling system 120 with attraction 102 and content provider 112, as well as data 110 provided by attraction 102 identifying characteristic(s) of a user experience provided by attraction 102 that may be enjoyable or aversive to a user, such as user 116, as well as location information, timing information, or location and timing information for one or more events of the user experience that include those characteristic(s). Also shown in Figure 1 are substitute content 114 provided by content provider 112, modification data 118 transmitted by system 120 to attraction 102 via communication network 106, and display 128 of system 120.

It is noted that although Figure 1 shows single user 116 in the interests of conceptual clarity, in other implementations, user 116 may correspond to a plurality of users, some or all of whom may be in possession of a system corresponding to system 120, and each of whom may have their own individual preferences and aversions. Consequently, user 116 is hereinafter referred to as first user 116.

Attraction 102 may be an indoor attraction, such as a movie theater, enclosed theme park ride, or immersive art installation or museum exhibit, for example, or an outdoor attraction, such as an open air theme park ride or a motor speedway. In some implementations, attraction 102 may be a venue offering a plurality of different attractions, such as a theme park, cruise ship, hotel, casino, or resort property, to name a few examples. Attraction controller 104 may include hardware processing components, software, lighting and sound controls, projection devices, HVAC devices, and mechanical elements, such as ride vehicles, again to name merely a few examples. Moreover, in some implementations attraction 102 may be or include a content delivery platform, such as a streaming platform for example, configured to provide a user experience to first user 116 in a form of content consumption by first user 116 through use of system 120.

Communication network 106 may be or include a packet-switched network such as the Internet, for example. Alternatively, communication network 106 may be or include a private wide area network (WAN), local area network (LAN), or another type of limited distribution or private network. In addition, or alternatively, in some implementations, communication network 106 may be configured to support a local area broadcast method, such as User Datagram Protocol (UDP) or Bluetooth^{®}, for instance. Furthermore, in some implementations, communication network 106 may be or include a high-speed network suitable for high performance computing (HPC), such as a 10 GigE network or an Infiniband network, for example.

It is noted that, although system 120 is shown as a smartphone in Figure 1, that representation is provided merely by way of example. In other implementations, system 120 may take the form of any suitable mobile computing device or system that implements data processing capabilities sufficient to provide a user interface, support connection to communication network 106, and perform the functionality ascribed to system 120 herein. That is to say, in other implementations, user system 120 may take the form of a tablet computer, or a wearable device such as a smartwatch or an augmented reality (AR) or virtual reality (VR) device, to name a few examples. It is also noted that display 128 of system 120 may take the form of a liquid crystal display (LCD), a light-emitting diode (LED) display, an organic light-emitting diode (OLED) display, a quantum dot (QD) display, or any other suitable display screen that perform a physical transformation of signals to light.

According to the exemplary implementation shown in Figure 1, system 120 utilized by first user 116 is configured to receive data 110 provided by attraction 102, compare characteristic(s) of a user experience provided by attraction 102 and identified by data 110 with preferences and aversions of first user 116 input to system 120 by first user 116, and take any of a variety of responsive actions based on that comparison. For example, in some use cases, system 120 may inform first user 116 that the user experience provided by attraction 102 includes preferred and/or aversive characteristic(s) before first user 116 arrives at attraction 102. Alternatively, or in addition, system 120 may use location data of first user 116 to alert first user 116 when first user 116 is within a predetermined distance of attraction 102. In addition, in some implementations in which system 120 identifies the user experience provided by attraction 102 as presenting content including characteristic(s) aversive to first user 116, system 120 may, in addition to informing or alerting first user 116 of that fact, further inform first user 116 of what substitute content 114 is available to the user as a replacement for the content including the aversive characteristic(s).

In use cases in which first user 116 decides to have the user experience provided by attraction 102, system 120 may use data 110 provided by attraction 102 to anticipate when during the user experience an event including one or more aversive characteristic(s) is to occur, warn first user 116 of the anticipated event, and in some implementations obtain and provide substitute content 114 to first user 116 during the event. In addition, or as another alternative, in some use cases, system 120 may transmit modification data 118 to attraction 102 requesting that one or more preferred characteristic(s) be increased or otherwise emphasized while first user 116 is having the user experience in attraction 102, that one or more aversive characteristic(s) be reduced or de-emphasized while first user 116 is having the user experience in attraction 102, or that one or more aversive characteristic(s) be omitted from the user experience while first user 116 is having that user experience in attraction 102.

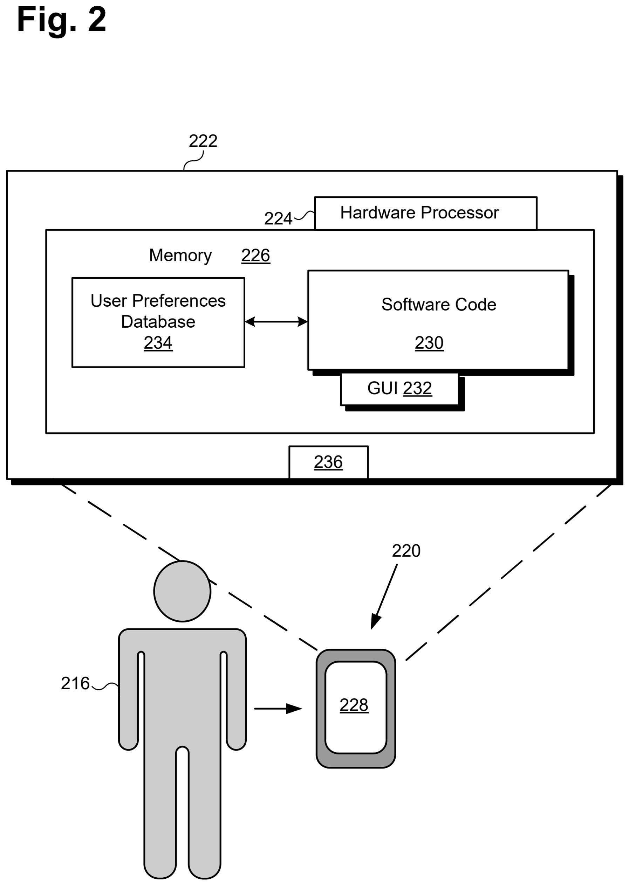

Figure 2 shows a more detailed representation of exemplary system 220 for providing personalized notification of attractions including user preferences or aversions, according to one implementation. As shown in Figure 2, system 220 includes computing platform 222 having hardware processor 224, and memory 226 implemented as a computer-readable non-transitory storage medium. According to the present exemplary implementation, memory 226 stores software code 230 and user preferences database 234 including one or more aversions of first user 216 and/or one or more preferences of first user 216. Also shown in Figure 1 is graphical user interface (GUI) 232 provided by software code 230, display 228 and transceiver 236 of system 220.

Although the present application refers to software code 230 and user preferences database 234 as being stored in memory 226 for conceptual clarity, more generally, memory 226 may take the form of any computer-readable non-transitory storage medium. The expression "computer-readable non-transitory storage medium," as defined in the present application, refers to any medium, excluding a carrier wave or other transitory signal, that provides instructions to hardware processor 224 of computing platform 222. Thus, a computer-readable non-transitory storage medium may correspond to various types of media, such as volatile media and non-volatile media, for example. Volatile media may include dynamic memory, such as dynamic random-access memory (dynamic RAM), while non-volatile memory may include optical, magnetic, or electrostatic storage devices. Common forms of computer-readable non-transitory storage media include, for example, internal and external hard drives, optical discs, RAM, programmable read-only memory (PROM), erasable PROM (EPROM) and FLASH memory.

Moreover, in some implementations, system 220 may utilize a decentralized secure digital ledger in addition to memory 226. Examples of such decentralized secure digital ledgers may include a blockchain, hashgraph, directed acyclic graph (DAG), and Holochain^{®} ledger, to name a few. In use cases in which the decentralized secure digital ledger is a blockchain ledger, it may be advantageous or desirable for the decentralized secure digital ledger to utilize a consensus mechanism having a proof-of-stake (PoS) protocol, rather than the more energy intensive proof-of-work (PoW) protocol.

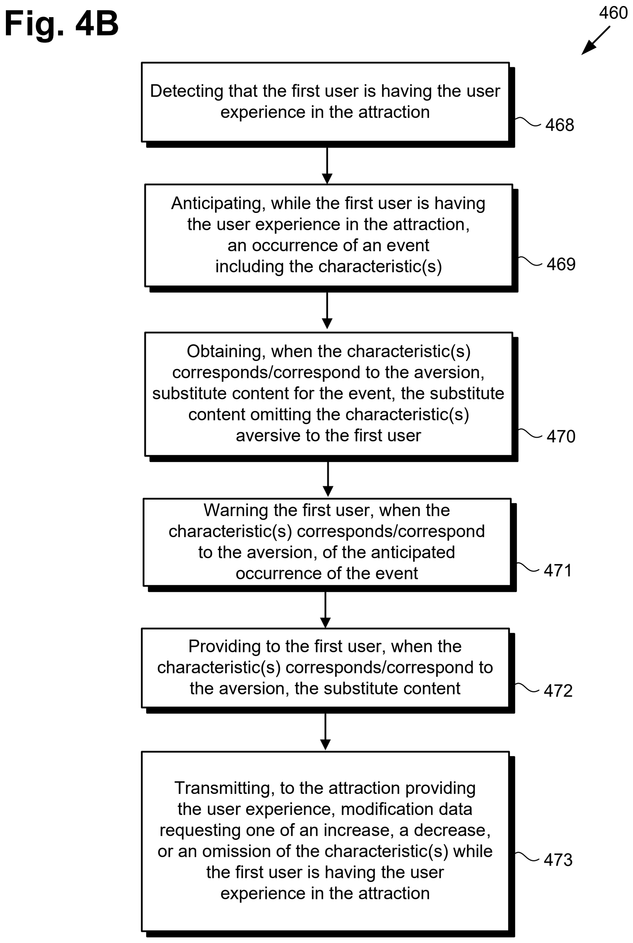

Although Figure 2 depicts software code 230 and user preferences database 234 as being co-located in memory 226, that representation is also provided merely as an aid to conceptual clarity. It is noted that in some implementations, user preferences database 234 may be stored remotely from system 220 and may be accessible to system 220 via communication network 106 in Figure 1. It is also noted that, in some implementations, software code 230 may include one or more trained ML models configured to improve the performance of software code 230 over time, as well as, in some implementations, perform other inferential tasks, as described below by reference to action 469 in Figure 4B.

Hardware processor 224 may include multiple hardware processing units, such as one or more central processing units, one or more graphics processing units, and one or more tensor processing units, one or more field-programmable gate arrays (FPGAs), custom hardware for ML training or inferencing, and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 222, as well as a Control Unit (CU) for retrieving programs, such as software code 230, from memory 226, while a GPU may be implemented to reduce the processing overhead of the CPU by performing computationally intensive graphics or other processing tasks. A TPU is an application-specific integrated circuit (ASIC) configured specifically for artificial intelligence (AI) processes such as ML modeling.

Transceiver 236 may be implemented as a wireless communication unit configured for use with one or more of a variety of wireless communication protocols. For example, transceiver 236 may include a fourth generation (4G) wireless transceiver, a 5G wireless transceiver, or 4G and 5G wireless transceivers. In addition, or alternatively, transceiver 236 may be configured for communications using one or more of Wireless Fidelity (Wi-Fi^{®}), Worldwide Interoperability for Microwave Access (WiMAX^{®}), Bluetooth^{®}, Bluetooth^{®} low energy (BLE), ZigBee^{®}, radio-frequency identification (RFID), near-field communication (NFC), and 60 GHz wireless communications methods.

First user 216 and system 220 including display 228 correspond respectively in general to first user 116 and system 120 including display 128, in Figure 1. Consequently, first user 216, system 220 and display 228 may share any of the characteristics attributed to respective first user 116, system 120 and display 128 by the present invention, and vice versa. Thus, like system 120 including display 128, system 220 may be a smartphone, a tablet computer, or a wearable device such as a smartwatch or an AR or VR device having display 228 in the form of an LCD, an LED display, an OLED display, a QD display, or any other suitable display screen that perform a physical transformation of signals to light. Moreover, although not shown in Figure 1, like system 220, system 120 may include a computing platform having features corresponding respectively to hardware processor 224, memory 226, software code 230 providing GUI 232, user preferences database 234 and transceiver 236.

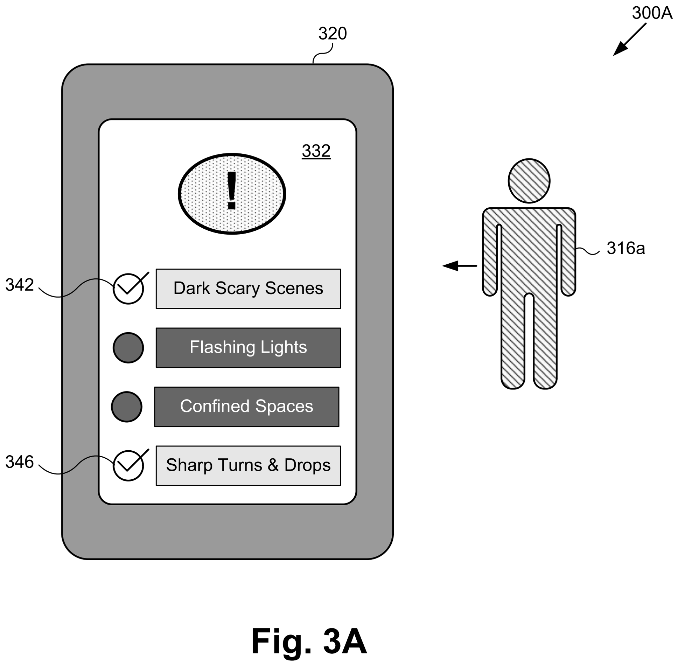

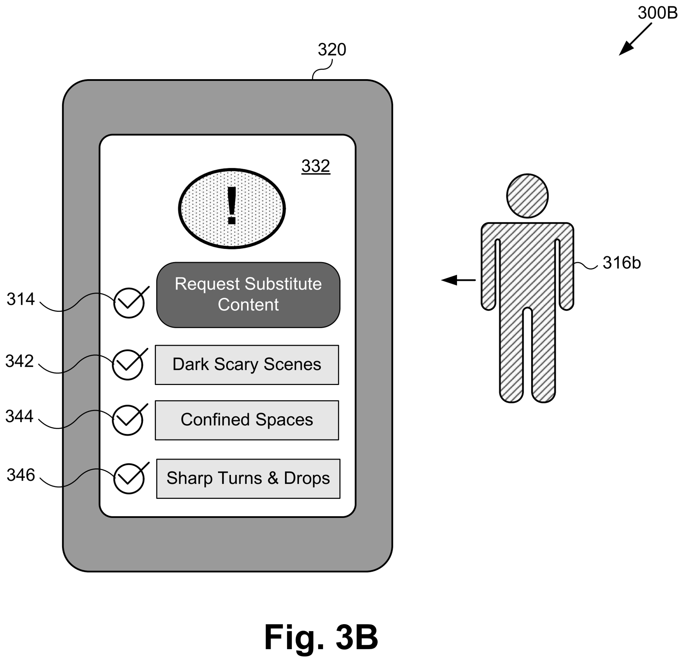

Figures 3A and 3B depict exemplary use cases 300A and 300B, respectively, in which first user 316a in use case 300A and first user 316b in use case 300B, are able to personalize the notifications they receive from system 320 by affirmatively selecting characteristics of attractions, such as attraction 102 in Figure 1, as aversive using GUI 332 displayed by system 320. It is noted that although Figures 3A and 3B depict identification of aversive characteristics by first users 316a and 316b, in some implementations GUI 332 may also be used to identify characteristics or attractions that are enjoyable or otherwise preferred, rather than aversive. It is noted that in some implementations, the aversions or preferences of a user identified through use of GUI 332 may be specific to a particular user experience. However, in other implementations, the aversions or preferences of the user identified through use of GUI 332 may be persistently stored in user preferences database 234, in Figure 2, and may be applied to all user experiences until changed by the user.

It is further noted that system 320 and GUI 332 correspond respectively to system 120/220 and GUI 232 shown variously in Figures 1 and 2. Consequently, system 320 and GUI 332 may share any of the features attributed to system 120/220 and GUI 232 by the present invention, and vice versa. Moreover, each of first users 316a and 316b correspond in general to first user 116/216 in Figures 1 and 2. Consequently, first user 116/216 may share any of the characteristics attributed to either of first users 316a and 316b by the present invention, and vice versa.

As shown in Figure 3A, first user 316a uses GUI 332 to select the characteristics "Dark Scary Scenes" 342 and "Sharp Turns and Drops" 346 as aversive, for example, because first user 316a has a young grandson who will be accompanying him at attractions. Referring to Figure 3B, as an example, first user 316b may haves a son who has autism or other sensory needs. In order to keep her son positively focused while enjoying attractions with first user 316b, first user 316b identifies the characteristics "Dark Scary Scenes" 342, "Confined Spaces" 344 and "Sharp Turns and Drops" 346 as aversive, and affirmatively requests available substitute content 314, which corresponds in general to substitute content 114 in Figure 1, in lieu of the characteristics first user 316b has identified as aversive.

It is noted that when first user 316b requests substitute content 314, GUI 332 may query user 316b as to which of the characteristics "Dark Scary Scenes" 342, "Confined Spaces" 344, and/or "Sharp Turns and Drops" 346, and may inform user 316b if substitute content for any of those characteristics is unavailable. For example, while substitute content 314 may typically be available for characteristic(s) in the form of visual effects such as "Dark Scary Scenes" 342 and audio effects, substitute content 314 may not be available for characteristic(s) such as odors, flavors, tactile effects, spatial effects such as "Confined Spaces" 344, or motion based effects such as "Sharp Turns and Drops" 346. In use cases in which substitute content 314 for characteristic(s) identified as aversive by a user is unavailable, the user may simply be warned of the presence of the aversive characteristic(s).

Identification of enjoyable characteristics using GUI 332 may be performed analogously to the process depicted in Figures 3A and 3B for aversive characteristics, in which predetermined characteristics are selectable as enjoyable to a user. However, in addition to, or as an alternative to, such a process for identifying aversive or enjoyable characteristics using GUI 332 based on a predetermined set of characteristics, in some implementations, GUI 332 may provide a text field enabling a user to enter a word or words describing enjoyable or aversive stimuli, and machine learning or any other suitable AI process may be used to identify aversive or enjoyable characteristic(s) of events included in the user experience provided by attraction 102 in Figure 1.

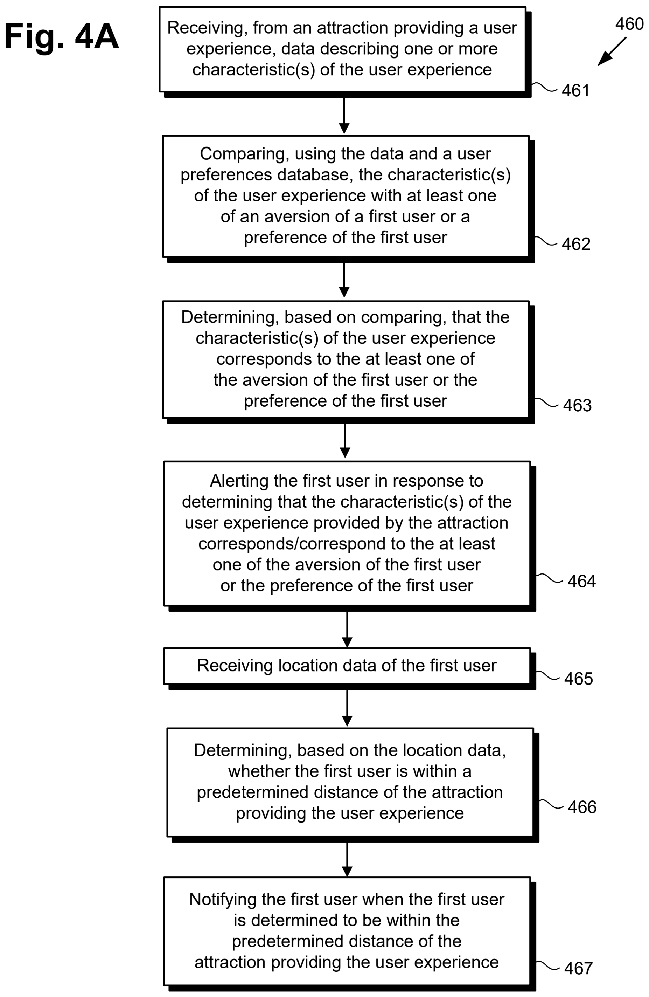

The functionality of system 120/220/320 and software code 230 are further described below by reference to Figures 4A and 4B. Figure 4A shows flowchart 460 presenting an exemplary method for providing personalized notification of attractions including user preferences or aversions, while Figure 4B shows additional actions for extending the method outlined in Figure 4A, according to one implementation. With respect to the actions described in Figures 4A and 4B, it is noted that certain details and features have been left out of flowchart 460 in order not to obscure the discussion of the inventive features in the present application.

Referring to Figure 4A in combination with Figures 1 and 2, flowchart 460 begins with receiving, from attraction 102 providing a user experience, data 110 describing characteristic(s) of the user experience (action 461). As noted above by reference to Figure 1, data 110 provided by attraction 102 identifies characteristic(s) of a user experience provided by attraction 102 that may be enjoyable or aversive to a user, such as first user 116/216, as well as location information, timing information, or location and timing information for one or more events of the user experience that include those characteristic(s).

In addition, in some implementations, data 110 may include a rating or score, on a scale of one to five or one to ten, for example, or any other desired range, of how intensely characteristic(s) that are enjoyable or aversive to the user are emphasized in the user experience provided by attraction 102, or may include an image, video clip, or audio depicting or representative of such characteristic(s). By way of example, where the user experience provided by attraction 102 includes virtual or mechanical spiders to which some users may have an aversion, data 110 may identify the presence of spiders and an intensity rating of one or two on a scale of one to ten, for example, if a single motionless spider is featured in the user experience, or a rating of 8 or more on the same scale, for example, where a swarm of aggressively moving spiders is depicted. It is noted that for user experiences provided by attraction 102 that include a plurality of events each corresponding to characteristic(s) that are enjoyable or aversive to the user, each such individual event may be rated or scored based on how intensely characteristic(s) that are enjoyable or aversive to the user are emphasized in that event. Moreover, those individual event scores may be in addition to, or in lieu of, an overall rating or score for the user experience as a whole.

The user experience characteristic(s) identified by data 110 may include one or more visual effects (hereinafter "visual effect(s)"), one or more audio effects (hereinafter "sound(s)"), one or more odors (hereinafter "odor(s)"), one or more flavors (hereinafter "flavor(s)"), motion, one or more tactile effects (hereinafter "tactile effect(s)"), or any combination thereof, to name merely a few examples. Visual effect(s) may include typically enjoyable visual effects such as blooming flowers or puppies at play, or typically aversive visual effects such as snakes, spiders, blood and gore, or high frequency light flashes for example.

User experience characteristic(s) in the form of sound(s) may include typically enjoyable sounds such as soothing music or bird song, or typically aversive sounds, such as screams, profanity, or car horns, to name a few. Moreover, in some instances it may not be a particular sound that a user finds enjoyable or aversive but its volume. It is noted that in implementations in which attraction 102 is or includes a streaming platform providing content to first user 116/216, data 110 may identify characteristic(s) such as visual effect(s), sounds, or visual effect(s) and sounds included in the content provided to first user 116/216 that may be enjoyable or aversive to first user 116/216.

Odor(s) may include typically enjoyable odors such as the aroma of fresh baked goods or hot chocolate, or typically aversive odors such as chemical solvents or sewage, for instance. User experiences including a culinary component may include characteristic(s) in the form of flavor(s) or ingredients that may be enjoyable or aversive. For example, characteristic(s) of a user experience providing a tasting menu may include spiciness, sweetness, saltiness and/or whether the menu includes meat or is vegetarian or vegan. Tactile effect(s) may include enjoyable effects such as a heated or well cushioned seating surface, or may include potentially aversive effects, such as being sprayed with hot or cold air or cold water, for example, or may include effects such as vibrations that may be enjoyable or aversive depending upon their forcefulness and/or frequency.

In addition, or alternatively, the user experience characteristic(s) identified by data 110 may be motion related characteristic(s), and may include one or more of the velocity, acceleration, or abrupt change in altitude, i.e., a sudden drop or rise, of a vehicle used by attraction 102 while providing the user experience. As another alternative, or in addition, the user experience characteristic(s) identified by data 110 may include one or more of the roll, pitch, or yaw of a vehicle used by attraction 102 while providing the user experience, or the sensation of being present in a confined space during the user experience.

As yet another alternative, or in addition, the user experience characteristic(s) identified by data 110 may include one or more time sensitive or weather condition sensitive effects. For example, a user having a user experience in attraction 102 that includes an outdoor ride may be exposed to stroboscopic visual effects due to movement past a picket fence or stand of trees at a certain time of day when skies are clear. Depending upon the time of day and weather conditions, such stroboscopic effects may be included or omitted from the characteristic(s) identified by data 110. Such a location and time sensitive effect may be mitigated by avoiding the location during a specific time interval, or varying the route of the ride to avoid the location at certain times. Alternatively, in use cases in which mitigation is impractical, the user may simply be warned of the possibly concerning stimuli.

In some use cases, the user experience characteristic(s) identified by data 110 may further include one or more tactile effects. For example, the user experience provided by attraction 102 may expose first user 116/216 to heat, cold, wetness, or any combination thereof. As a specific example, in use cases in the user experience provided by attraction 102 results in users being splashed or otherwise exposed to water, data 110 may identify that characteristic, as well as, in some implementations identify where first user 116/216 should situate themselves during the experience to minimize, or maximize, getting wet.

In addition, in some implementations, data 110 may also include information identifying available substitute content 114 for characteristic(s) that a user may find aversive. Such substitute content 114 may take the form of substitute visual effect(s) and/or substitute sound(s) provided by system 120/220, and/or any of a variety of other sensory effects depending upon the specific features of the user experience provided by attraction 102. Data 110 may be received, in action 461, by software code 230, executed by hardware processor 224 of system 120/220.

Continuing to refer to Figures 1, 2, and 4A in combination, flowchart 460 further includes comparing, using data 110 and user preferences database 234, the characteristic(s) of the user experience identified by data 110 with at least one of an aversion of first user 116/216 or a preference of first user 116/216 (action 462). As noted above by reference to Figure 2, preferences database 234 includes one or more aversions of first user 216 and/or one or more preferences of first user 216. Thus, comparison of the characteristic(s) of the user experience provided by attraction 102 and identified by data 110 with one or more entries in user preferences database 234 may reveal which characteristic(s) of the user experience provided by attraction 102, if any, correspond to an aversion or a preference of first user 116/216. The comparing in action 462 may be performed by software code 230, executed by hardware processor 224 of system 120/220, and using data 110 and user preferences database 234.

Continuing to refer to Figures 1, 2, and 4A in combination, flowchart 460 further includes determining, based on the comparing performed in action 462, that the characteristic(s) of the user experience corresponds/correspond to an aversion of first user 116/216, a preference of first user 116/216, or to an aversion of first user 116/216 and a preference of first user 116/216 (action 463). Action 463 may be performed by software code 230, executed by hardware processor 224 of system 120/220.

Continuing to refer to Figures 1, 2, and 4A in combination, alerting first user 116/216 in response to determining that the characteristic(s) of the user experience provided by attraction 102 corresponds/correspond to an aversion of first user 116/216, a preference of first user 116/216, or an aversion by first user 116/216 and a preference by first user 116/216 (action 464). The alert provided in action 464 may include one or more of a visual alert shown on display 128/228 of system 120/220, an audio alert generated by system 120/220, a haptic effect produced by system 120/220, or any combination thereof. Alerting of first user 116/216, in action 466, may be performed by software code 230, executed by hardware processor 224 of system 220.

It is noted that the alert provided to first user 116/216 in action 464 may be provided while first user 116/216 is present at or within a predetermined vicinity of attraction 102, or prior to the arrival of first user 116/216 at attraction 102, or even prior to departure by first user 116/216 from another to travel to attraction 102. As a result, the alert provided to first user 116/216 in action 464 can advantageously enable first user 116/216 to avoid the effort and time of navigating to an attraction likely to include concerning stimuli aversive to first user 116/216, as well as to avoid the unnecessary expense of purchasing a ticket to such an attraction.

In some implementations, the method outlined by flowchart can conclude with action 464 described above. However, and continuing to refer to Figures 1, 2, and 4A in combination, in some implementations flowchart 460 may further include receiving location data of first user 116/216 (action 465). It is noted that action 465, as well as subsequent actions 466 and 467, are optional, and in some implementations may be omitted from flowchart 460.

The location data of first user 116/216 received in optional action 465 may be Global Positioning System (GPS) data, for example, received by system 120/220 from one or more GPS satellites, based on movement by system 120/220 in the possession of first user 116/216. Alternatively, or in addition, the location data of first user 116/216 may be received as a radio frequency beacon or other signal broadcast by attraction 102, such as an RFID, Bluetooth^{®}, or BLE signal, for example. The location data of first user 116/216 may be received, in optional action 465, by software code 230, executed by hardware processor 224 of system 220.

Continuing to refer to Figures 1, 2, and 4A in combination, in implementations in which optional action 465 is performed, flowchart 460 further includes determining, based on the location data received in action 465, whether first user 116/216 is within a predetermined distance of attraction 102 providing the user experience (action 466). Optional action 466 may be performed by software code 230, executed by hardware processor 224 of system 220. It is noted that the predetermined distance used in the determination performed in action 466 may be a universal predetermined distance that is the same for substantially all attractions, or may vary among different types of attractions, or may even vary from attraction-to-attraction. In implementations in which the predetermined distance is variable among attractions, that predetermined distance may be identified by data 110 provided by attraction 102 and received by system 120/220 in action 461.

Continuing to refer to Figures 1, 2, and 4A in combination, in implementations in which optional actions 465 and 466 are performed, flowchart 460 further includes notifying first user 116/216 when first user 116/216 is determined to be within the predetermined distance of the attraction providing the user experience (action 467). Optional action 467 may be performed by software code 230, executed by hardware processor 224 of system 220.As noted above, in some implementations, the method described by reference to flowchart 460 may conclude with action 464 described above. However, as shown by Figure 4B, in some implementations, the method outlined in Figure 4A may be extended by some or all of the additional actions described by reference to Figure 4B. It is noted that in implementations in which optional actions 465, 466 and 467 are omitted from the method outlined by flowchart 460, action 468 in Figure 4B may follow directly from action 464. However, in implementations in which optional actions 465, 466 and 467 are included in the method outlined by flowchart 460, action 468 may follow action 467.

Referring to Figure 4B in combination with Figures 1 and 2, in some implementations flowchart 460 may further include detecting that first user 116/216 is having the user experience in attraction 102 (action 468). Attraction 102 may include a plurality of signal transmitters, such as radio frequency transmitters for example, situated in various locations within attraction 102. The signals provided by those transmitters may be received by system 120/220, using transceiver 226, and may be interpreted by software code 230, executed by hardware processor 224 and using data 110 received from attraction 102 in action 461, to detect that first user 116/216 has entered attraction 102 and to track the progression of first user 116/216 through the user experience as first user 116/216 is having the user experience in attraction 102.

Continuing to refer to Figures 1, 2 and 4B in combination, flowchart 460 may further include anticipating, while first user 116/216 is having the user experience in attraction 102, the occurrence of an event including the characteristic(s) that corresponds/correspond to the aversion or the preference of first user 116/216 (action 469). In use cases in which the user experience provided by attraction 102 includes prerecorded content, such as a feature film or a recorded live performance for example, the event including the characteristic(s) that corresponds/correspond to the aversion or the preference of first user 116/216 may be anticipated using the timecode and metadata or script of the prerecorded content, which may be provided by data 110 received by system 120/220 from attraction 102 in action 461.

Alternatively, in use cases in which the user experience provided by attraction 102 is or includes a dynamic experience, such as a theme park ride, for example, the event including the characteristic(s) that corresponds/correspond to the aversion or the preference of first user 116/216 may be anticipated based on the known show timing and sequencing of the ride, which may be provided by data 110 received by system 120/220 from attraction 102 in action 461. That is to say, the effects presented during a dynamic experience are typically running off of a time code that the user location within the attraction must be synchronized with in order to forewarn the user of a characteristic(s) aversive to the user, for example, or to provide substitute content for an aversive characteristic(s). Moreover, for some attractions, multiple effects may be running in loops independently of one another, so that the location of the user within the attraction needs to be synchronized with the timing of each effect.

Anticipation of the event including the characteristic(s) that corresponds/correspond to the aversion or the preference of first user 116/216 may be performed, in action 469, by software code 230, executed by hardware processor 224 of system 120/220. However, it is noted that in some use cases, the information regarding the user experience provided by attraction 102, and included by data 110, may be insufficient to enable accurate anticipation of the timing and/or location of the event including the characteristic(s) that corresponds/correspond to the aversion or the preference of first user 116/216. In some of those use cases, "anticipating" the occurrence of the event may include inferring the occurrence of the event, using one or more trained predictive ML models included as a feature or features of software code 230.

Continuing to refer to Figures 1, 2 and 4B in combination, flowchart 460 may further include, when the characteristic(s) corresponds/correspond to the aversion, obtaining substitute content 114 for the event including the characteristic(s) aversive to first user 116/216, where substitute content 114 omits the characteristic(s) aversive to first user 116/216 (action 470). As noted above by reference to action 461, data 110 received by system 120/220 from attraction 102 may include information identifying available substitute content 114 for characteristic(s) that a user may find aversive. As further noted above, such substitute content 114 may take the form of substitute visual effect(s) and/or substitute sound(s) played out be system 120/220, and/or any of a variety of other sensory effects depending upon the specific features of the user experience provided by attraction 102. Moreover, and as also noted above, while substitute content 114 may typically be available for characteristic(s) in the form of visual effects and audio effects, substitute content may not be available for characteristic(s) such as odors, flavors, tactile effects, spatial effects such as confined spaces, or motion based effects. As shown in Figure 1, substitute content 114, when available, may be obtained from content provider 112, via communication network 106 and network links 108. Substitute content 114 may be obtained, in action 470, by software code 230, executed by hardware processor 224 of system 120/220.

It is noted that although flowchart 460 depicts action 470 as following action 469, that representation is merely provided as an example. In some implementations, action 470 may be omitted from the method outlined by flowchart 460. In implementations in which action 470 is included in the method outlined by flowchart 460, action 470 may precede action 469, may follow action 469, or may be performed in parallel with, i.e., contemporaneously with, action 469.

Continuing to refer to Figures 1, 2 and 4B in combination, flowchart 460 may further include warning first user 116/216 of the anticipated occurrence of the event including the characteristic(s) aversive to first user 116/216 (action 471). The warning provided to first user 116/216 in action 471 may be provided at any time prior to the start of the event including the characteristic(s) aversive to first user 116/216. The warning to first user 116/216 provided in action 471 may include one or more of a visual alert shown on display 128/228 of system 120/220, an audio alert generated by system 120/220, a haptic effect produced by system 120/220, or any combination thereof. Warning of first user 116/216, in action 471, may be performed by software code 230, executed by hardware processor 224 of system 220.

It is noted that although flowchart 460 depicts action 471 as following actions 468 and 469, that representation is merely provided as an example. In some implementations, action 471 may be omitted from the method outlined by flowchart 460. In other implementations, as noted above, action 470 may be omitted from the method outlined by flowchart 460. In those implementations, action 471 may follow directly from action 469. However, in implementations in which actions 470 and 471 are included in the method outlined by flowchart 460, action 471 may precede action 470, may follow action 470, or may be performed in parallel with, i.e., contemporaneously with, action 470.

In some implementations, the method outlined by flowchart 460 may omit action 470 and may conclude with action 471 described above. However, in implementations in which action 470 is included in the method outlined by flowchart 460, flowchart 460 may further include providing to first user 116/216 substitute content 114 (action 472). Action 472 may be performed by software code 230, executed by hardware processor 224, and using display 128/228 of system 120/220.

Continuing to refer to Figures 1, 2 and 4B in combination, in some implementations, the method outlined by flowchart 460 may omit actions 470, 471 and 472. In some of those implementations, flowchart 460 may further include transmitting, to attraction 102 providing the user experience, modification data 118 requesting one of an increase, a decrease, or an omission of characteristic(s) of the user experience while first user 116/216 is having the user experience in attraction 102 (action 473). By way of example, where the user experience provided by attraction 102 is a flight or space travel simulation individual to first user 116/216, and where user 116/216 finds abrupt changes in altitude to be aversive, modification data 118 may request that attraction controller 104 reduce or omit the abruptness of altitude changes during the simulation experienced by first user 116/216. Alternatively, or in addition, where the user experience provided by attraction 102 is a flight or space travel simulation individual to first user 116/216 and user 116/216 enjoys the sensation of acceleration, modification data 118 may request that attraction controller 104 increase the g-force experienced by first user 116/216 during the simulation, within limits predetermined to be safe.

Moreover, as an alternative to providing first user 116/216 with substitute content 114, in some implementations characteristic(s) aversive to first 116/216 may be attenuated or otherwise reduced in intensity. For example, where loud sounds or bright lights are aversive to first user 116/216, modification data 118 may request that attraction controller 104 reduce the volume of one or more sounds, or reduce the brightness of lighting to which first user 116/216 is exposed. Transmission of modification data 118 to attraction 102, in action 473, may be performed by software code 230, executed by hardware processor 224 of system 220.

It is noted that the the actions listed in Figure 4B may describe multiple alternative use cases, including: (i) use cases in which aversive characteristics can be reduced (e.g., reducing sound volume), (ii) use cases in which substitute content 114 for aversive characteristics is available and provided, (iii) use cases in which aversive characteristics can be omitted and (iv) use cases in which enjoyable characteristics can be increased (e.g., more speed). As a result, various actions in Figure 4B can be omitted or have their ordering changed to conform to those alternative use cases as described below.

In use cases (i) in which aversive characteristics can be reduced, actions 469, 470, 471 and 472, or actions 470, 471 and 472, or actions 470 and 472 may be omitted from the method outlined by flowchart 460. In use cases in which actions 469, 470, 471 and 472 are omitted from the method outlined by flowchart 460, action 473 may follow directly from action 468, may precede action 468, or may be performed in parallel with, i.e., contemporaneously with, action 468. In use cases in which actions 470, 471 and 472 are omitted from the method outlined by flowchart 460, action 473 may follow directly from action 469, may precede either or both of actions 468 and 469, or may be performed in parallel with either or both of actions 468 and 469. In use cases in which action 470 and 472 are omitted from the method outlined by flowchart 460, action 473 may precede either of actions 468, 469, or 471, may follow action 471, or may by performed in parallel with any one or more of actions 468, 469 and 471.

In use cases (ii) in which substitute content 114 for aversive characteristics is available and provided, actions 471 and 473, or action 473 alone, may be omitted from the method outlined by flowchart 460. In use cases in which actions 471 and 473 are omitted from the method outlined by flowchart 460, actions 468, 469 and 470 may be performed in any order, or two or more of actions 468, 469 and 470 may be performed in parallel, i.e., contemporaneously. In those use cases, action 472 follows actions 468, 469 and 470. In use cases in which action 473 alone is omitted from the method outlined by flowchart 460, actions 468, 469 and 470 may be performed in any order, or two or more of actions 468, 469 and 470 may be performed in parallel. In those use cases, action 471 may follow actions 468, 469 and 470, and be followed in turn by action 472, or actions 471 and 472 may follow actions 468, 469 and 470 and may be performed in parallel.

In use cases (iii) and (iv) in which aversive characteristics can be omitted or enjoyable characteristics can by increased, actions 469, 470, 471 and 472, or action 470, 471 and 472 may be omitted from the method outlined by flowchart 460. In use cases in which actions 469, 470, 471 and 472 are omitted from the method outlined by flowchart 460, action 473 may follow directly from action 468, may precede action 468, or may be performed in parallel with, i.e., contemporaneously with, action 468. In use cases in which actions 470, 471 and 472 are omitted from the method outlined by flowchart 460, action 473 may follow directly from action 469, may precede either or both of actions 468 and 469 or may be performed in parallel with either or both of actions 468 and 469.

Referring to Figures 1, 2, 3A and 3B in combination, in some implementations, after first user 116/216/316a/316b has had the user experience provided by attraction 102, system 120/220/320 may utilize GUI 232/332 to elicit user feedback data from first user 116/216/316a/316b regarding the accuracy and/or timeliness of the warnings, alerts, or the warnings and alerts provided to first user 116/216/316a/316b by system 120/220/320, as well as the level of satisfaction by first user 116/216/316a/316b with any substitute content 114/314 provided to first user 116/216/316a/316b by system 120/220/320. That user feedback data may be input to one or more ML models included in software code 230 and trained to improve the performance of software code 230, thereby improving the personalized notification performance of system 120/220/320 over time. That is to say, the one or more ML models included in software code 230 may be updated and improved based on successes and failures of previous alerts/warnings (as defined by the user feedback data) to improve future alerts/warnings. By way of example, system 120/220/320 might improve the timeliness of alerts/warnings in response to user feedback data.

With respect to the method outlined by flowchart 460, it is noted that, in various implementations, actions 461, 462, 463 and 464 (hereinafter "actions 461-464"), as well as the optional combinations of actions 461-464 with actions 465, 466 and 467, and/or any of actions 464, 468, 469, 470, 471, 472 and 473, may be performed in an automated process from which human participation may be omitted.

Thus, the present application discloses a personalized notification solution that addresses and overcomes the drawbacks and deficiencies in the conventional art. The novel and inventive systems and methods disclosed in the present application advance the state-of-the-art by introducing a solution that enables a user to proactively identify characteristic(s) that the user finds concerning, as well as characteristic(s) that the user enjoys. Based on that user identification of characteristic(s) as concerning or enjoyable, the present personalized notification solution can advantageously inform a user of attractions that the user may enjoy, or be averse to due to their inclusion of concerning stimuli, as well as, in some implementations, a rating, on a scale or one to five or one to ten for example, of how intensely enjoyable or concerning characteristic(s) are emphasized in the attraction, and to alert the user when the user is within a predetermined distance of such an attraction.

In addition, in instances in which a user opts to engage with an attraction that includes enjoyable or concerning characteristic(s), the present personalized notification solution can anticipate when during the user experience provided by the attraction an event including the enjoyable or concerning characteristic(s) will occur, as well as, in some use cases, provide substitute content for consumption by the consumer during that event. Moreover, the present personalized notification solution can use one or more machine ML models to process feedback data from a user subsequent to engagement of that user with a user experience provided by an attraction about which the user has been informed and/or for which substitute content has been provided, in order to improve the performance of the disclosed systems and methods on an ongoing basis.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described herein, but many rearrangements, modifications, and substitutions are possible without departing from the scope of the present invention.

## Claims

1. A method comprising:
receiving, from an attraction providing a user experience, data describing a characteristic of the user experience;
comparing, using the data and a user preferences database including at least one of an aversion of a first user or a preference of the first user, the characteristic of the user experience with the at least one of the aversion of the first user or the preference of the first user;
determining, based on comparing, that the characteristic of the user experience corresponds to the at least one of the aversion of the first user or the preference of the first user; and
alerting the user, in response to determining that the characteristic corresponds to the at least one of the aversion of the first user or the preference of the first user.

2. The method of claim 1, the method further comprising:
detecting that the first user is having the user experience in the attraction;
anticipating, while the first user is having the user experience in the attraction and when the characteristic corresponds to the aversion, an occurrence of an event including the characteristic; and
warning the first user of the anticipated occurrence of the event.

3. The method of claim 1 or 2, further comprising:
detecting that the first user is having the user experience in the attraction;
anticipating, while the first user is having the user experience in the attraction and when the characteristic corresponds to the aversion, an occurrence of an event including the characteristic;
obtaining substitute content for the event the substitute content omitting or decreasing the characteristic corresponding to the aversion; and
providing to the first user the substitute content.

4. The method of at least one of claims 1 to 3, further comprising:
detecting that the first user is having the user experience in the attraction; and
transmitting to the attraction providing the user experience modification data requesting one of an increase, a decrease, or an omission of the characteristic while the first user is having the user experience in the attraction.

5. The method of at least one of claims 1 to 4, wherein the characteristic comprises at least one of a visual effect, a sound, an odor, a flavor, a motion, or a tactile effect.

6. The method of at least one of claims 1 to 5, wherein the characteristic comprises at least one of a velocity, an acceleration, a change in altitude, a roll, a pitch, or a yaw of a vehicle used by the attraction while providing the user experience.

7. The method of at least one of claims 1 to 6, further comprising:
receiving location data of the first user;
determining, based on the location data, whether the first user is within a predetermined distance of the attraction providing the user experience; and
notifying the first user when the first user is determined to be within the predetermined distance of the attraction providing the user experience.

8. A system comprising:
a computing platform including a hardware processor, a transceiver and a memory storing a software code and a user preferences database including at least one of an aversion of a first user or a preference of the first user;
the hardware processor configured to execute the software code to:
receive, from an attraction providing a user experience, data describing a characteristic of the user experience;
compare, using the data and the user preferences database, the characteristic of the user experience with the at least one of the aversion of the first user or the preference of the first user;
determine, based on comparing, that the characteristic of the user experience corresponds to the at least one of the aversion of the first user or the preference of the first user; and
alert the first user in response to determining that the characteristic corresponds to the at least one of the aversion of the first user or the preference of the first user.

9. The system of claim 8, wherein the hardware processor is further configured to execute the software code to:
detect that the first user is having the user experience in the attraction;
anticipate, while the first user is having the user experience in the attraction and when the characteristic corresponds to the aversion, an occurrence of an event including the characteristic; and
warn the first user of the anticipated occurrence of the event.

10. The system of claim 8 or 9, wherein the hardware processor is further configured to execute the software code to:
detect that the first user is having the user experience in the attraction;
anticipate, while the first user is having the user experience in the attraction and when the characteristic corresponds to the aversion, an occurrence of an event including the characteristic;
obtain substitute content for the event, the substitute content omitting or decreasing the characteristic corresponding to the aversion; and
provide the substitute content to the first user.

11. The system of at least one of claims 8 to 10, wherein the hardware processor is further configured to execute the software code to:
detect that the first user is having the user experience in the attraction; and
transmit, to the attraction providing the user experience, modification data requesting one of an increase, a decrease, or an omission of the characteristic while the first user is having the user experience in the attraction.

12. The system of at least one of claims 8 to 11, wherein the characteristic comprises at least one of a visual effect, a sound, an odor, a flavor, a motion, or a tactile effect.

13. The system of at least one of claims 8 to 12, wherein the characteristic comprises at least one of a velocity, an acceleration, a change in altitude, a roll, a pitch, or a yaw of a vehicle used by the attraction while providing the user experience.

14. The system of at least one of claims 8 to 13, wherein the hardware processor is further configured to execute the software code to:
receive location data of the first user;
determine, based on the location data, whether the first user is within a predetermined distance of the attraction providing the user experience; and
notify the first user when the first user is determined to be within the predetermined distance of the attraction providing the user experience.
